# EUROPEAN PATENT APPLICATION

(11) **EP 4 403 758 A1**
(43) Date of publication of application: **24.07.2024**
(21) Application number: 23152825.8
(22) Date of filing: 23.01.2023
(51) Int. Cl.: F02B 37/00, F02B 41/10

(54) **A TURBO ARRANGEMENT**

(71) Applicant: VOLVO TRUCK CORPORATION, 405 08 Göteborg (SE)
(72) Inventor: ERIKSSON, Pontus, 253 75 Helsingborg (SE); PERSSON, Johan, 274 93 Skurup (SE)
(74) Representative: Kransell & Wennborg KB

(57) **Abstract**

The inventive concept relates to a turbo arrangement for a vehicle, the turbo arrangement comprising a turbo unit comprising a first turbine, a turbocompound unit, and a conduit mechanically connecting the turbo unit and the turbocompound unit to each other, wherein the turbocompound unit is arranged in downstream fluid communication with the turbo unit to receive combustion gas fed from the turbo unit, the conduit housing an elongated duct, wherein the turbo arrangement further comprises a reducing agent injector, the reducing agent injector being mounted to the elongated duct.

## Description

### TECHNICAL FIELD

The inventive concept relates generally to a turbo arrangement. In particular aspects, the inventive concept relates to a turbo arrangement for a vehicle. The inventive concept can be applied in heavy-duty vehicles, such as trucks, buses, and construction equipment. Although the inventive concept may be described with respect to a particular vehicle, the inventive concept is not restricted to any particular vehicle.

### BACKGROUND

Aftertreatment of exhaust emissions from internal combustion engines are preferably implemented downstream the internal combustion engine to reduce the emission of environmentally harmful gases to the ambient environment outside the vehicle. Conventionally, a reducing agent is injected to the combustion gases exhausted from the internal combustion engine before the exhaust gases reached a catalytic converter.

However, there is a desire to improve the injection of the reducing agent to enable for e.g. improved atomization of the reducing agent which may result in improved conversion of e.g. nitrogen oxides into diatomic nitrogen and water in the downstream catalytic converter.

### SUMMARY

According to a first aspect of the inventive concept, there is provided a turbo arrangement for a vehicle, the turbo arrangement comprising a turbo unit comprising a first turbine comprising a first turbine wheel fluidly connectable to an internal combustion engine and configured to receive combustion gas exhausted from the internal combustion engine, a turbocompound unit comprising a second turbine, the second turbine comprising a second turbine wheel operatively connectable to a crankshaft of the internal combustion engine, and a conduit mechanically connecting the turbo unit and the turbocompound unit to each other, wherein the turbocompound unit is arranged in downstream fluid communication with the turbo unit to receive combustion gas fed from the turbo unit, the conduit housing an elongated duct arranged between the first turbine and the second turbine, wherein the turbo arrangement further comprises a reducing agent injector, the reducing agent injector being mounted to the elongated duct.

The first aspect of the inventive concept may seek to mitigate the problem of properly dosing reducing agent into a flow of exhaust gases from the internal combustion engine. A technical benefit may include that the injection of reducing agent may be fed towards the first turbine which can enable for improved atomization of the reducing agent before the reducing agent reaches an aftertreatment system connected downstream the second turbine. By arranging the reducing agent injector at a position relatively far upstream in the exhaust flow, compared to a conventional solution at which the reducing agent is arranged downstream the second turbine, the temperature of the reducing agent may be higher when arriving at the aftertreatment system, and there is also an increased time period for the reducing agent to evaporate and mix with the exhaust flow. In some examples, an injection direction of the reducing agent injector may at least partly face the first turbine. In some examples, the reducing agent injector may comprise an injector nozzle facing the first turbine.

In some examples, the elongated duct may be cone shaped. A technical benefit may include that the combustion gas from the first turbine can be diffused when directed along the cone shaped surface of the elongated duct.

In some examples, a tip of the cone shaped elongated duct may face the first turbine. In some examples, the reducing agent injector may be mounted at the tip of the cone shaped elongated duct. A technical benefit may include that the reducing agent can be directed in multiple directions towards the flow of combustion gases fed from the first turbine.

In some examples, the turbo arrangement may further comprise a reducing agent conduit attached to the reducing agent injector, the reducing agent conduit being fluidly connectable to a source of reducing agent.

In some examples, the reducing agent conduit may extend from the reducing agent injector to a rear end of the elongated duct, the rear end being arranged opposite the tip in an elongated direction of the elongated duct. A technical benefit may include that the reducing agent can be fed to the reducing agent injector through a position of the elongated duct without interfering with the flow of combustion gases.

In some examples, the turbo arrangement may comprise a stationary nozzle at the rear end, the stationary nozzle is configured to receive the combustion gas fed from the turbo unit and to feed the combustion gas towards the turbocompound unit.

The stationary nozzle should preferably be construed as a non-rotation nozzle configured to feed the flow of combustion gases from the first turbine towards the second turbine. The flow of combustion gases is subsequently fed towards an aftertreatment system.

In some examples, the nozzle comprises at least one nozzle vane, the reducing agent conduit being arranged through the nozzle vane. A technical benefit may include that the nozzle vane may enable for a well-defined passage for the reducing agent conduit such that the reducing agent conduit is not in conflict with other components of the turbo arrangement.

In some examples, the reducing agent injector may comprise a plurality of orifices, each orifice being configured to spread reducing agent in a separate direction. A technical benefit may, as also indicated above, include that the reducing agent can be directed in multiple directions towards the flow of combustion gases fed from the first turbine. By e.g. directing the reducing agent in opposite direction compared to the direction of combustion gas, the relative flow velocity may increase. This may further increase the atomization of the reducing agent and the mixture of reducing agent in the combustion gas may hence be improved.

In some examples, the conduit and the elongated duct may form an exhaust flow channel. In some examples, the exhaust flow channel may be arranged between an inner surface of the conduit and an outer surface of the elongated duct.

In some examples, the exhaust flow channel may be extending circumferentially around the elongated duct. A technical benefit may include that the flow of combustion gases may be uniformly transported from the first turbine towards the second turbine.

In some examples, the second turbine wheel may comprise a plurality of turbine wheel blades. In some examples, the plurality of turbine wheel blades of the second turbine wheel may be arranged at an end position of the exhaust flow channel.

In some examples, the turbo unit may comprise a first compressor operatively connected to the first turbine. A technical benefit may include that ambient air can be pressurized and fed to an inlet manifold of the internal combustion engine.

In some examples, the first turbine may comprise a plurality of turbine blades.

In some examples, the reducing agent injector is a urea injector. A technical benefit may include that the turbo arrangement can be advantageously combined with an aftertreatment system comprising a selective catalytic converter arrangement.

According to a second aspect of the inventive concept, there is provided an internal combustion engine arrangement, comprising an internal combustion engine and a turbo arrangement according to any one of the examples described above in relation to the first aspect.

According to a second aspect of the inventive concept, there is provided a vehicle comprising the turbo arrangement according to any of the examples described above in relation to the first aspect.

Effects and features of the second and third aspects are largely analogous to those described above in relation to the first aspect.

The above aspects, accompanying claims, and/or examples disclosed herein above and later below may be suitably combined with each other as would be apparent to anyone of ordinary skill in the art.

Additional features and advantages are disclosed in the following description, claims, and drawings, and in part will be readily apparent therefrom to those skilled in the art or recognized by practicing the inventive concept as described herein. There are also disclosed herein control units, computer readable media, and computer program products associated with the above discussed technical benefits.

### BRIEF DESCRIPTION OF THE DRAWINGS

With reference to the appended drawings, below follows a more detailed description of aspects of the inventive concept cited as examples.
Fig. 1 is an exemplary illustration of a vehicle according to one example,
Fig. 2 is an exemplary cross sectional view of a turbo arrangement according to one example, and
Fig. 3 is an exemplary detailed view of a portion of the turbo arrangement according to one example.

### DETAILED DESCRIPTION

Aspects set forth below represent the necessary information to enable those skilled in the art to practice the inventive concept.

The inventive concept described in the following may seek to mitigate the problem of properly dosing reducing agent into a flow of exhaust gases from the internal combustion engine. A technical benefit may include that improved atomization of the reducing agent before the reducing agent reaches an aftertreatment system connected downstream the second turbine may be obtained.

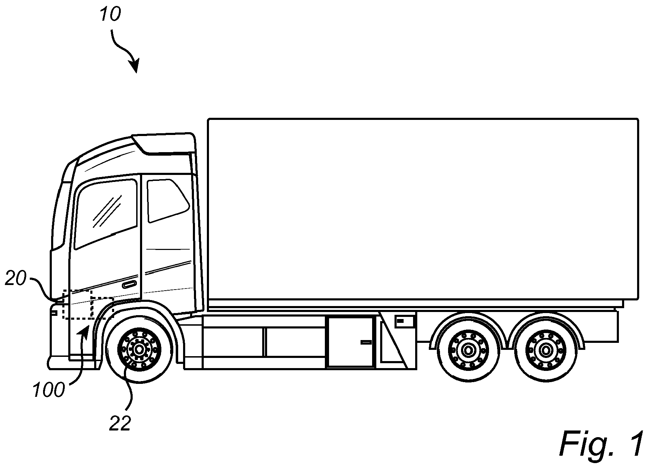

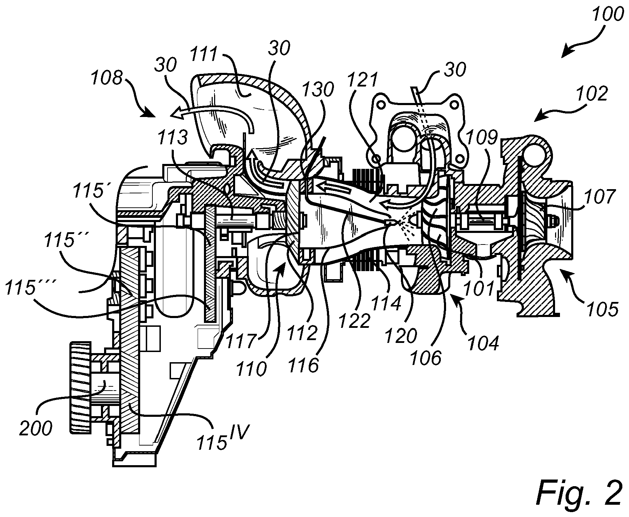

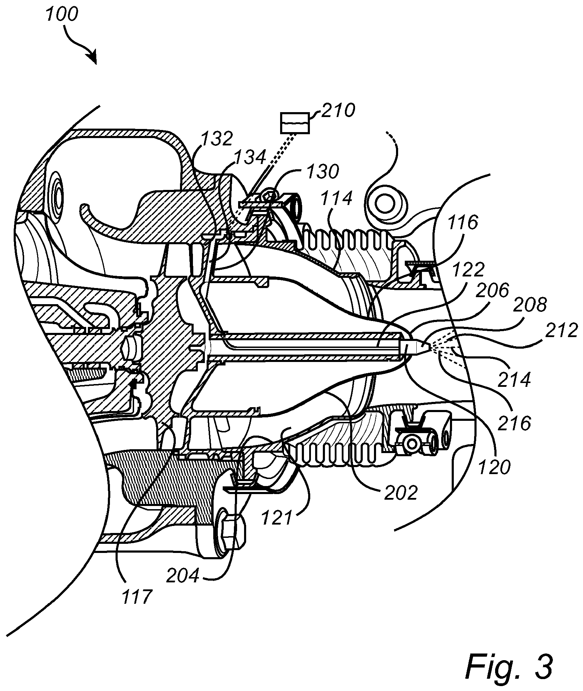

With reference to Fig. 1, which is an exemplary illustration of a vehicle 10 according to one example. The exemplified vehicle 10 is a truck comprising an internal combustion engine 20 for applying a propulsion torque on at least one pair of wheels 22 of the vehicle 10. The vehicle 10 may also be a so-called hybrid vehicle comprising, in addition to the internal combustion engine 20, an electric traction motor (not shown). The vehicle 10 also comprises a turbo arrangement 100 connected to the internal combustion engine 20. The turbo arrangement 100 is merely schematically illustrated in Fig. 1, and a further detailed description thereof will now be given in relation to Figs. 2 and 3.

Turning to Fig. 2, which is an exemplary cross sectional view of the turbo arrangement 100 according to one example. The turbo arrangement 100 comprises a turbo unit 102. The turbo unit 102 comprises a first turbine 104 comprising plurality of turbine blades 101. The first turbine 104 is arranged in downstream fluid communication with the internal combustion engine 20. In particular, the first turbine 104 is arranged in downstream fluid communication with an exhaust outlet, such as e.g. an exhaust manifold, of the internal combustion engine 20 in order to receive combustion gas 30 exhausted from the internal combustion engine 20 during operation. The turbo unit 102 also comprises a first compressor 105 configured to receive and pressurize a flow of air, which pressurized air is preferably fed to an inlet, such as e.g. an inlet manifold, of the internal combustion engine 20. The first turbine 104 comprises a first turbine wheel 106, and the first compressor 105 comprises a first compressor wheel 107. The first turbine wheel 106 and the first compressor wheel 107 are preferably mechanically connected to each other by a compressor shaft 109. The combustion gas 30 exhausted from the internal combustion engine 20 induces a rotation of the first turbine wheel 106. Hereby, also a rotation of the compressor shaft 109, and thus also a rotation of the first compressor wheel is provided, whereby the first compressor 105 pressurizes the flow of air.

The turbo arrangement 100 also comprises a turbocompound unit 108. The turbocompound unit 108 comprises a second turbine 110 provided with a second turbine wheel 112. The second turbine 110 comprises a plurality of turbine wheel blades 117 and is arranged in downstream fluid communication with the first turbine 104 via a conduit 114. Hence, the conduit 114 mechanically connects the turbo unit 102 and the turbocompound unit 108 to each other. The flow of combustion gas 30 directed into the first turbine 104 is thus subsequently fed through the conduit 114 and to the second turbine wheel 112 of the second turbine 110. The combustion gas 30 is, downstream the second turbine 110 fed through an exhaust outlet 111 of the turbocompound unit 108 and directed towards an ambient environment outside the vehicle 10. The vehicle 10 may preferably comprise an aftertreatment system (not shown) in fluid communication between the exhaust outlet 111 and the ambient environment.

Moreover, the second turbine wheel 112 is operatively connected to a crankshaft 200 of the internal combustion engine 20. As exemplified in Fig. 2, the second turbine wheel 112 comprises a second turbine wheel shaft 113 which is connected to the crankshaft 200 via a number of meshing gear wheels 115', 115", 115"', 115^{IV}. The combustion gas 30 fed from the first turbine 104, via the conduit 114 induces a rotation of the second turbine wheel 112.

Hereby, the rotation of the second turbine wheel 112 generates a torque on the crankshaft 200 via the second turbine wheel shaft 113.

As indicated above, the turbo arrangement 100 comprises the conduit 114 connecting the turbo unit 102 and the turbocompound unit 108 to each other. As exemplified, an elongated duct 116 is housed within the conduit 114. The elongated duct 116 is thus elongated in a direction from the turbocompound unit 108 towards the turbo unit 102. Preferably, and as indicated in Fig. 2, the elongated duct 116 is cone shaped, whereby an exhaust flow channel 121 is formed between the conduit 114 and the elongated duct 116. Thus, the combustion gas 30 fed from the first turbine 104 is directed towards the second turbine 110 via the exhaust flow channel 121.

Furthermore, as exemplified in Fig. 2, and which will be described in further detail below with reference to Fig. 3, the turbo arrangement 100 also comprises a reducing agent injector 120. The reducing agent injector 120 is mounted to the above described elongated duct 116. The reducing agent injector 120 is configured to inject a flow of reducing agent to the combustion gas 30 fed from the first turbine 104. In detail, an injection direction of the reducing agent injector 120 is at least partly facing the first turbine 104. Preferably, the reducing agent is urea and which is suitably used for an aftertreatment system comprising a selective catalytic reduction device downstream the exhaust outlet 111 of the turbocompound unit 108.

Reference is now made to Fig. 3 which is an exemplary detailed view of a portion of the turbo arrangement 100 according to one example. As can be seen in Fig. 3, the exhaust flow channel 121 is arranged between an inner surface 204 of the conduit 114 and an outer surface 202 of the elongated duct 116. The exhaust flow channel 121 is thus extending circumferentially around the elongated duct 116, whereby the plurality of turbine wheel blades of the second turbine wheel is arranged at an end position of the exhaust flow channel. The exhaust flow channel 121 is preferably arranged to diffuse the flow of combustion gas 30 fed from the first turbine 104 to the second turbine 110.

As is also exemplified in Fig. 3, the elongated duct 116 is preferably cone shaped. In a similar vein, also the conduit 114 is preferably cone shaped at its axial extension radially outside the elongated duct 116. The elongated duct 116 preferably has a larger diameter at a position in the vicinity of the second turbine 110, i.e. at a rear end 130, compared to its opposite axial position. In detail, a tip 206 of the cone shaped elongated duct 116 faces the first turbine 104.

Furthermore, and as exemplified in Fig. 3, the reducing agent injector 120 is mounted at the tip 206 of the cone shaped elongated duct 116. As indicated in Fig. 3, the reducing agent injector 120 preferably comprises a plurality of orifices 212, 214, 216. Each of the orifices is preferably configured to direct reducing agent into a specific direction. Hence, each orifice 212, 214, 216 injects reducing agent in a different direction compared to the injection direction of the other orifices 212, 214, 216. The reducing agent injector 120 also preferably comprises an injector nozzle 208 facing the first turbine 104. In such case, the plurality of orifices is arranged on the injector nozzle 208.

Moreover, the turbo arrangement 100 further comprises a reducing agent conduit 122 configured to feed reducing agent from a source of reducing agent 210. The reducing agent conduit 122, which is also depicted in Fig. 2, is thus attached to the reducing agent injector 120 as well as to the source of reducing agent 210. The source of reducing agent 210 may be a tank, a vessel or a canister filled with reducing agent. As can be seen in Fig. 3, the reducing agent conduit 122 is exemplified as extending from the reducing agent injector 120 mounted to the tip of the cone shaped elongated duct 116 to the rear end 130 arranged at the opposite axial side of the elongated duct 116. In yet further detail, the reducing agent conduit 122 is directed out from the turbocompound unit 108 via a nozzle vane 134 of a stationary nozzle 132 at the rear end 130.

The stationary nozzle 132 is configured to controllably direct the combustion gas 30 fed from the first turbine 104 towards the second turbine 110. Put it differently, the stationary nozzle 132 is configured to receive the combustion gas 30 fed from the turbo unit 102 and to feed the combustion gas 30 towards the turbocompound unit 108.

### EXAMPLE LIST

Example 1. A turbo arrangement for a vehicle, the turbo arrangement comprising a turbo unit comprising a first turbine comprising a first turbine wheel fluidly connectable to an internal combustion engine and configured to receive combustion gas exhausted from the internal combustion engine, a turbocompound unit comprising a second turbine, the second turbine comprising a second turbine wheel operatively connectable to a crankshaft of the internal combustion engine, and a conduit mechanically connecting the turbo unit and the turbocompound unit to each other, wherein the turbocompound unit is arranged in downstream fluid communication with the turbo unit to receive combustion gas fed from the turbo unit, the conduit housing an elongated duct arranged between the first turbine and the second turbine, wherein the turbo arrangement further comprises a reducing agent injector, the reducing agent injector being mounted to the elongated duct.

Example 2. The turbo arrangement of example 1, wherein an injection direction of the reducing agent injector is at least partly facing the first turbine.

Example 3. The turbo arrangement of example 1 or 2, wherein the elongated duct is cone shaped.

Example 4. The turbo arrangement of example 3, wherein a tip of the cone shaped elongated duct faces the first turbine.

Example 5. The turbo arrangement of example 4, wherein the reducing agent injector is mounted at the tip of the cone shaped elongated duct.

Example 6. The turbo arrangement of examples 1-5, further comprising a reducing agent conduit attached to the reducing agent injector, the reducing agent conduit being fluidly connectable to a source of reducing agent.

Example 7. The turbo arrangement of example 6, when dependent on any one of examples 4 or 5, wherein the reducing agent conduit extends from the reducing agent injector to a rear end of the elongated duct, the rear end being arranged opposite the tip in an elongated direction of the elongated duct.

Example 8. The turbo arrangement of example 7, wherein the turbo arrangement comprises a stationary nozzle at the rear end, the stationary nozzle is configured to receive the combustion gas fed from the turbo unit and to feed the combustion gas towards the turbocompound unit.

Example 9. The turbo arrangement of example 8, wherein the nozzle comprises at least one nozzle vane, the reducing agent conduit being arranged through the nozzle vane.

Example 10. The turbo arrangement of any one of examples 1 - 9, wherein the reducing agent injector comprises a plurality of orifices, each orifice being configured to spread reducing agent in a separate direction.

Example 11. The turbo arrangement of any one of examples 1 - 10, wherein the conduit and the elongated duct form an exhaust flow channel.

Example 12. The turbo arrangement of example 11, wherein the exhaust flow channel is arranged between an inner surface of the conduit and an outer surface of the elongated duct.

Example 13. The turbo arrangement of any one of examples 11 or 12, wherein the exhaust flow channel is extending circumferentially around the elongated duct.

Example 14. The turbo arrangement of any one of examples 1 - 13, wherein the second turbine wheel comprises a plurality of turbine wheel blades.

Example 15. The turbo arrangement of example 14 when dependent on any one of examples 11 - 13, wherein the plurality of turbine wheel blades of the second turbine wheel is arranged at an end position of the exhaust flow channel.

Example 16. The turbo arrangement of any one of examples 1 - 15, wherein the turbo unit comprises a first compressor operatively connected to the first turbine.

Example 17. The turbo arrangement of any one of examples 1 - 16, wherein the first turbine comprises a plurality of turbine blades.

Example 18. The turbo arrangement of any one of examples 1 - 17, wherein the reducing agent injector comprises an injector nozzle facing the first turbine.

Example 19. The turbo arrangement of any one of examples 1 - 18, wherein the reducing agent injector is a urea injector.

Example 20. An internal combustion engine arrangement, comprising an internal combustion engine and a turbo arrangement according to any one of examples 1 - 19.

Example 21. A vehicle comprising the turbo arrangement according to any of examples 1 - 19.

The terminology used herein is for the purpose of describing particular aspects only and is not intended to be limiting of the inventive concept. As used herein, the singular forms "a," "an," and "the" are intended to include the plural forms as well, unless the context clearly indicates otherwise. As used herein, the term "and/or" includes any and all combinations of one or more of the associated listed items. It will be further understood that the terms "comprises," "comprising," "includes," and/or "including" when used herein specify the presence of stated features, integers, steps, operations, elements, and/or components, but do not preclude the presence or addition of one or more other features, integers, steps, operations, elements, components, and/or groups thereof.

It will be understood that, although the terms first, second, etc., may be used herein to describe various elements, these elements should not be limited by these terms. These terms are only used to distinguish one element from another. For example, a first element could be termed a second element, and, similarly, a second element could be termed a first element without departing from the scope of the present inventive concept.

Relative terms such as "below" or "above" or "upper" or "lower" or "horizontal" or "vertical" may be used herein to describe a relationship of one element to another element as illustrated in the Figures. It will be understood that these terms and those discussed above are intended to encompass different orientations of the device in addition to the orientation depicted in the Figures. It will be understood that when an element is referred to as being "connected" or "coupled" to another element, it can be directly connected or coupled to the other element, or intervening elements may be present. In contrast, when an element is referred to as being "directly connected" or "directly coupled" to another element, there are no intervening elements present.

Unless otherwise defined, all terms (including technical and scientific terms) used herein have the same meaning as commonly understood by one of ordinary skill in the art to which this inventive concept belongs. It will be further understood that terms used herein should be interpreted as having a meaning consistent with their meaning in the context of this specification and the relevant art and will not be interpreted in an idealized or overly formal sense unless expressly so defined herein.

It is to be understood that the present inventive concept is not limited to the aspects described above and illustrated in the drawings; rather, the skilled person will recognize that many changes and modifications may be made within the scope of the present inventive concept and appended claims. In the drawings and specification, there have been disclosed aspects for purposes of illustration only and not for purposes of limitation, the scope of the inventive concepts being set forth in the following claims.

## Claims

1. A turbo arrangement (100) for a vehicle, the turbo arrangement comprising:
- a turbo unit (102) comprising a first turbine (104) comprising a first turbine wheel (106) fluidly connectable to an internal combustion engine and configured to receive combustion gas exhausted from the internal combustion engine,
- a turbocompound unit (108) comprising a second turbine (110), the second turbine comprising a second turbine wheel (112) operatively connectable to a crankshaft (200) of the internal combustion engine, and
- a conduit (114) mechanically connecting the turbo unit and the turbocompound unit to each other, wherein the turbocompound unit is arranged in downstream fluid communication with the turbo unit to receive combustion gas fed from the turbo unit, the conduit housing an elongated duct (116) arranged between the first turbine and the second turbine,
wherein the turbo arrangement further comprises a reducing agent injector (120), the reducing agent injector being mounted to the elongated duct (116).

2. The turbo arrangement of claim 1, wherein an injection direction of the reducing agent injector is at least partly facing the first turbine (104).

3. The turbo arrangement of claims 1 or 2, wherein the elongated duct is cone shaped.

4. The turbo arrangement of claim 3, wherein a tip of the cone shaped elongated duct faces the first turbine.

5. The turbo arrangement of claim 4, wherein the reducing agent injector is mounted at the tip of the cone shaped elongated duct.

6. The turbo arrangement of any one of the preceding claims, further comprising a reducing agent conduit (122) attached to the reducing agent injector, the reducing agent conduit being fluidly connectable to a source of reducing agent.

7. The turbo arrangement of claim 6, when dependent on any one of claims 4 or 5, wherein the reducing agent conduit extends from the reducing agent injector to a rear end (130) of the elongated duct, the rear end being arranged opposite the tip in an elongated direction of the elongated duct.

8. The turbo arrangement of claim 7, wherein the turbo arrangement comprises a stationary nozzle (132) at the rear end (130), the stationary nozzle is configured to receive the combustion gas fed from the turbo unit and to feed the combustion gas towards the turbocompound unit.

9. The turbo arrangement of claim 8, wherein the nozzle comprises at least one nozzle vane (134), the reducing agent conduit being arranged through the nozzle vane.

10. The turbo arrangement of any one of the preceding claims, wherein the reducing agent injector comprises a plurality of orifices, each orifice being configured to spread reducing agent in a separate direction.

11. The turbo arrangement of any one of the preceding claims, wherein the conduit and the elongated duct form an exhaust flow channel.

12. The turbo arrangement of claim 11, wherein the exhaust flow channel is arranged between an inner surface of the conduit and an outer surface of the elongated duct.

13. The turbo arrangement of any one of claims 11 or 12, wherein the exhaust flow channel is extending circumferentially around the elongated duct.

14. An internal combustion engine arrangement, comprising an internal combustion engine and a turbo arrangement according to any one of the preceding claims.

15. A vehicle comprising the turbo arrangement according to any of claims 1-13.
